# EUROPÄISCHE PATENTSCHRIFT

(11) **EP 1 840 056 B1**
(45) Veröffentlichungstag und Bekanntmachung des Hinweises auf die Patenterteilung: **08.10.2008**
(21) Anmeldenummer: 07004941.6
(22) Anmeldetag: 09.03.2007
(51) Int. Cl.: B65G 63/02, B60P 1/64, B61D 47/00

(54) **Einrichtung zum Auf- und Abladen einer Befülleinrichtung quer zu deren Transportrichtung**
Device for loading and unloading a filler device transversely to the direction of transport
Dispositif destiné au chargement et déchargement d'un dispositif de remplissage transversalement à son sens de transport

(30) Priorität: 26.03.2006 DE 102006014214
(43) Veröffentlichungstag der Anmeldung: 03.10.2007
(73) Patentinhaber: Bermüller, Wolfgang, 81927 München (DE)
(72) Erfinder: Bermüller, Wolfgang, 81927 München (DE)
(74) Vertreter: Säger, Manfred

(56) Entgegenhaltungen:
- EP-A- 0 831 002

## Beschreibung

Die Erfindung betrifft eine Einrichtung zum quer zur Transportrichtung erfolgenden Auf- und Abladen von auf einer Transporteinrichtung befindlichen Befülleinrichtung nach der Präambel des Anspruchs 1.

Es ist eine Einrichtung bekannt (DE-19501543-C1), bei der als Befülleinrichtung ein Container verwendet wird, der umgebaut sein muss und zwei zueinander parallel sowie voneinander beabstandete nach unten offene Kanäle auf seiner Unterseite aufweist. In diesen Kanal kann ein Umsetzgerät mit eigenem Antrieb hineinfahren und dann mittels einer ebenfalls vorhandenen Hubeinrichtung den Container anheben. Im angehobenen Zustand kann dann der Container quer zu dessen Transportrichtung auf der Transporteinrichtung von dem Umsetzgerät bewegt werden.

Von Nachteil bei dieser bekannten Einrichtung ist die Vielzahl der Hydraulik-Verbindungsleitungen zu dem als Betriebshof- und/oder Strassenfahrzeug ausgebildeten und als Transporteinrichtung dienenden Lastkraftwagen, die das Bewegen der Container mit dem Umsetzgerät umständlich macht und dieses an den Lastkraftwagen bindet, was den Betriebsaufwand erhöht. Andererseits wird das Umsetzgerät, das nicht nur die translatorische Bewegung in der Ebene erzeugt, sondern auch die vertikale Hubbewegung beim Aufsatteln des Containers, stark belastet und ist daher störanfällig.

Es ist ferner eine gattungsgemässe Einrichtung nach der Präambel des Anspruchs 1 bekannt (EP-A-0 831 002), bei der die Befülleinrichtung nur zum einen Teil, vorzugsweise zur Hälfte auf der Ladebereichsebene steht, zum anderen Teil auf die in diese eingelassenen Hubbrücken, womit die Unterseite der CCs nicht vollständig auf der Ladebereichsebene aufgesetzt ist. Es kommt hinzu, dass nicht die Einrichtung selbst, sondern nur dessen beidseitig ausfahrbare Tragarme unter die Befülleinrichtung und zwischen der Ladebereichsebene der Transporteinrichtung und das bezüglich der Transportrichtung vordere und das hintere Paar der CCs in Stellung gebracht wird.

Der Erfindung liegt daher die Aufgabe zugrunde, eine gattungsgemässe Einrichtung der eingangs angegebenen Art für bekannte Container jeglicher Grösse, ohne die Notwendigkeit diese umzubauen, vorzuschlagen, die einfacher und kostengünstiger ausgebildet ist und mit dem das Bewegen der Container einfacher und weniger umständlich sowie wirtschaftlicher und störunanfälliger im Betrieb wird.

Diese Aufgabe wird erfindungsgemäss durch den Gegenstand der unabhängigen Ansprüche gelöst.

Die Erfindung als System teilt also die Funktionen des Angreifens an der Befülleinrichtung sowie des vertikalen Anhebens einerseits der Transporteinrichtung wie Waggon oder Lastkraftwagen zu, wohingegen andererseits die mit dieser Transporteinrichtung zusammenwirkende, als Verschubträger ausgebildete erfindungsgemässe Einrichtung mit einen eigenen Antrieb zum translatorischen Bewegen des auf ihm aufliegenden Containers ausgestattet ist, woraus ein einfacher Aufbau sowie störunanfälligerer Betrieb resultiert. Hinzukommt, dass bei dem erfindungsgemässen System herkömmliche Container ohne jegliche Änderungen verwendet werden können, vorausgesetzt, sie verfügen über CCs. An der Transporteinrichtung müssen nur geringfügige Anbauten vorgesehen werden, nämlich Vertikalhubgeräte mit einem ausfahrbaren Vertikalhubteil, das den Container über dessen CCs anhebt und das beim Absenken bis vollständig unter die Ladebereichsebene eingefahren werden kann, damit es beim Transport in Verschieberichtung nicht störend im Wege ist. Vor dem Absenken muss aber je ein Verschubträger unter den Container, also unter dessen vorderes und unter dessen hinteres Paar CCs und über der Ladebereichsebene der Transporteinrichtung gebracht werden. Hierzu kann jeder Verschubträger kürzer als der Abstand der einzelnen CCs jedes Paars ausgestaltet sein; es muss lediglich an der Transporteinrichtung sichergestellt sein, dass sich die Ladebereichsebene bis in den Bereich neben dem vorderen sowie dem hinteren Paar CCs erstreckt, wo der Verschubträger zunächst abgesetzt wird, bevor er in Transportrichtung und quer zu seiner Verschieberichtung genau unter den -zwei CCs auf der Unterseite des Containers verbindenden- Träger plaziert wird. Diese Zusätze an der Transporteinrichtung sind geringfügig sowie einfach und unproblematisch anzubringen.

Insgesamt ergibt sich erfindungsgemäss, dass sich die Einbauten im Gewichtslimit für Zulassungsänderungen bewegen. Schon existierende Umschlagstechniken auf der Transporteinrichtung z.B. dem Waggon können weiter genutzt werden. Andererseits können mit dem erfindungsgemässen System versehene Transporteinrichtungen ohne Einschränkung für den bislang üblichen Einsatz nach dem Stand der Technik weiter genutzt werden. Weiter können jegliche über CCs verfügenende Container ohne Änderungen eingesetzt werden und der Verschubträger nicht für einen Hub, sondern lediglich für eine translatorische Bewegung in der Ebene ausgelegt sein, was nicht nur das Handling, sondern auch Aufbau verbessert und die Störanfälligkeit verringert.

Wenn jeder Verschubträger länger als der Abstand der einzelnen CCs jedes Paars sein soll, so weist in vorteilhafter Weiterbildung der Erfindung der Verschubträger zwecks dessen mit einem parallel zu der Transportrichtung verlaufenden Querschub erfolgenden Plazierung zwischen die Ladebereichsebene der Transporteinrichtung und das bezüglich der Transportrichtung vordere oder hintere Paar der CCs bei angehobenem Container zwei in dessen einer Seite mündende, von der Ober- bis zur Unterseite reichende, an die Form der Vertikalhubteile des Vertikalhubgeräts angepasste Ausnehmungen auf.

Vorteilhafterweise weist der Verschubträger eine Vielzahl von dem Antrieb angetriebener Rollen auf und sind bei dem Verschubträger die Achsen von je zwei Rollen an den beiden Enden zweier Winkelhebel und jeder Winkelhebel im Bereich des Scheitels seines Winkels an dem Verschubträger angelenkt, wobei alle Achsen parallel zur Transportrichtung und rechtwinklig zur Verschieberichtung verlaufen, wodurch sich eine Unebenheiten auf der Ladebereichsebene kompensierende Pendellagerung ergibt.

Wenn bei dem Verschubträger die Rollen mit Zahnkränzen versehen sind und die beiden in einem Paar Winkelhebel gelagerten Rollen über eine Schnecke angetrieben sind, können ansonsten für das Verschieben auf abschüssigem Gelände notwendige Bremsen entfallen, was den Antrieb noch einfacher und sicherer macht.

Bei dem Verschubträger des Systems weist der Antrieb einen Elektromotor sowie ein von diesem angetriebenens Getriebe, vorzugsweise Schneckengetriebe auf, was den Vorteil einer im Vergleich zum Stand der Technik mit störanfälligen Hydraulik-Versorgungs-Leitungen einfacheren An- und Abkopplung von der Energieversorgung bietet.

In vorteilhafter Weiterbildung der Erfindung ist bei dem Verschubträger seitlich ein zum Eingriff in eine Stromschiene ausgebildeter Stromabnehmer für den elektrischen Antrieb vorgesehen, was -bei entsprechendem Anbau der Stromschiene als Stromgeber an der Transporteinrichtung- den Vorteil in sich birgt, dass Verschubträger versorgungsmässig nicht, wie beim Stand der Technik- an den Lastkraftwagen als Transporteinrichtung gebunden sind, sondern darüberhinaus auch an die elektrische Versorgung eines Waggons als Transporteinrichtung anschliessbar sind, so dass sie vielfältiger einsetzbar sind. Es ist aber auch möglich, z.B. den Verschubträger auf dem Waggon abzustellen, die dann von einer Anzahl weiterer, systemmässig angepasster Lastkraftwagen, die aber nur eine Ladebereichsebene und Vertikalhubgeräte mit einem ausfahrbaren Vertikalhubteil,
aber keinen Verschubträger aufweisen, genutzt werden, was sich als äusserst wirtschaftlich erweist.

Wenn desweiteren bei dem Vertikalhubgerät der Vertikalhubzylinder als hydraulischer oder pneumatischer Zylinder ausgebildet ist, auf dessen als Kolbenstange ausgebildetem Vertikalhubteil ein an dem Deckel oder dem Boden des CCs an- bzw. eingreifender Zapfen angeordnet ist, lässt sich mit Vorteil eine einfache Engergieversorgung von dem hydraulischen oder pneumatischen Bordnetz der Transporteinrichtung, also dem Waggon oder dem Lastkraftwagen sicherstellen.

In zweckmässiger Ausgestaltung und Weiterbildung der Erfindung weicht bei dem Vertikalhubgerät der Zapfen im Querschnitt von der Kreisform ab und ist durch Verdrehen im CC formschlüssig verriegelt festlegbar, wodurch zugleich der Container über das CC an der Transporteinrichtung, also dem Waggon oder dem Lastkraftwagen durch Niederhalten festgelegt ist, wodurch zugleich eine Transportsicherung gegeben ist.

Mit Vorteil kann bei dem Vertikalhubgerät der Zapfen zum Angriff an dem Deckel des CC und/oder der Zapfen mit einen umlaufenden Bund zum Angriff an dem Boden im Bereich um die Eintrittsöffnung des CC herum ausgebildet sein.

Zur Erzielung einer biegesteifen Ladebereichsebene ist es von Vorteil, wenn bei einer Transporteinrichtung auf deren beiden zueinander parallelen Längsträgern sowie zwischen den hinteren sowie dem vorderen Paar der an dem hinteren bzw. dem vorderen Paar der CCs an der Unterseite des Containers angreifenden Vertikalhubteile der Vertikalhubgeräte je ein die Ladebereichsebene bildendes Konsolblech für das Aufsetzen des Verschubträgers vorgesehen ist, das bei entsprechender Länge desselben mit Öffnungen für den Durchtritt der Vertikalhubteile versehen sein kann.

Um das seitliche Ansetzen des Verschubträgers zu vereinfachen, ist es von Vorteil, wenn bei einer Transporteinrichtung auf deren beiden zueinander parallelen Längsträgern des im Bereich neben dem vorderen sowie hinteren Paar von CCs je ein die Ladebereichsebene bildendes Konsolblech vorgesehen ist.

Zum einfacheren Plazieren des Verschubträgers quer zu seiner Verschieberichtung genau unter den -zwei CCs auf der Unterseite des Containers verbindenden- Träger sind bei dem Verschubträger zu dessen Bewegung (mit einem parallel zu der Transportrichtung verlaufenden Querschub) zwischen den Ladebereich der Transporteinrichtung und das bezüglich der Transportrichtung vordere und das hintere Paar der CCs bei angehobenem Container zwei voneinander beabstandete, anheb- und absenkbare Querschubvorrichtungen vorgesehen.

Wenn bei einem Waggon oder Lastkraftwagen als Transporteinrichtung eine an deren elektrisches Bordnetz anschliessbare Stromschiene zur Aufnahme des Stromabnehmers des Verschubträger vorgesehen ist, kann dieser vielfältiger z.B. von einem Waggon ohne Lastkraftwagen eigestzt werden.

Weitere zweckmässige Ausgestaltungen und Weiterbildungen der Erfindung sind in den Unteransprüchen gekennzeichnet.

Auführungsbeispiele der Erfindung werden nachfolgend unter Bezugnahme auf die Zeichnung näher erläutert. In dieser zeigt:
Fig. 1 ein erfindungsgemässes System zum Auf- und Abladen von Containern;
Fig. 2 eine Seitenansicht einer als Waggon ausgebildete Transporteinrichtung;
Fig. 3 das System gemäss Fig. 1 in teilweise abgebrochener Darstellung und grösserem Massstab mit einer als Lastkraftwagen ausgebildeten Transporteinrichtung;
Fig. 4 eine Ansicht IV-IV gemäss Fig. 3;
Fig. 5 die Transporteinrichtung gemäss Fig. 3, jedoch in anderem Betriebszustand;
Fig. 6 eine Ansicht VI-VI gemäss Fig. 5;
Fig. 7 die Transporteinrichtung gemäss Fig. 3, jedoch mit auf die Transporteinrichtung abgesenktem Container in über die Corner Castings (CC) über das Vertikalhubteil eines Vertikalhubgerätes verriegelten Zustand;
Fig. 8 die Transporteinrichtung gemäss Fig. 7, im freigegebenen Zustand;
Fig. 9 die Transporteinrichtung gemäss Fig. 7, im völlig unter die Ladebereichsebene der Transporteinrichtung abgesenkten Vertikalhubteil des Vertikalhubgerätes;
Fig. 10 das an einem Waggon als Transporteinrichtung vorgesehene Vertikalhubgerät mit einem Vertikalhubteil, in angehobenem Zustand;
Fig. 11 die Einzelheit XI gemäss Fig. 10;
Fig. 12 die als Waggon ausgebildete Transporteinrichtung gemäss Fig. 10, mit auf dem Verschubträger aufgesetzten Container;
Fig. 13 den auf den als Waggon als Transporteinrichtung abgesenkten und verriegelten Container ohne Verschubträger;
Fig. 14 eine erste Ausführungsform des Verschubträgers zum Auf- und Abladen der Container, in schematischer Seitenansicht;
Fig. 15 die Vorderansicht XV-XV gemäss Fig. 14;
Fig. 16 die Ansicht XVI-XVI gemäss Fig. 14;
Fig. 17 eine zweite Ausführungsform des Verschubträgers in der Ansicht gemäss Fig. 14, jedoch mit über ein Vertikalhubteil angehobenen Container;
Fig. 18 einen Schnitt XVIII-XVIII gemäss Fig. 17;
Fig. 19 den Verschubträger gemäss Fig. 17, in schematischer Draufsicht;
Fig. 20 eine dritte Ausführungsform des Verschubträgers in der Ansicht gemäss Fig. 17 mit über ein Vertikalhubteil angehobenen Container;
Fig. 21 einen Schnitt XXI-XXI gemäss Figur 20;
Fig. 22 eine Druntersicht XXII-XXII gemäss Figur 20;
Fig. 23 eine Ansicht XXIII-XXIII gemäss Figur 20;
Fig. 24 eine Ansicht XXIV-XXIV gemäss Figur 23 und
Fig. 25 eine Einzelheit in Figur 20.

Zur Straffung der Zeichnungsbeschreibung sollen mit gleichem Bezugszeichen versehene Teile auch identisch sein, so dass nicht jedes Teil jeder einzelnen Figur beschrieben werden muss.

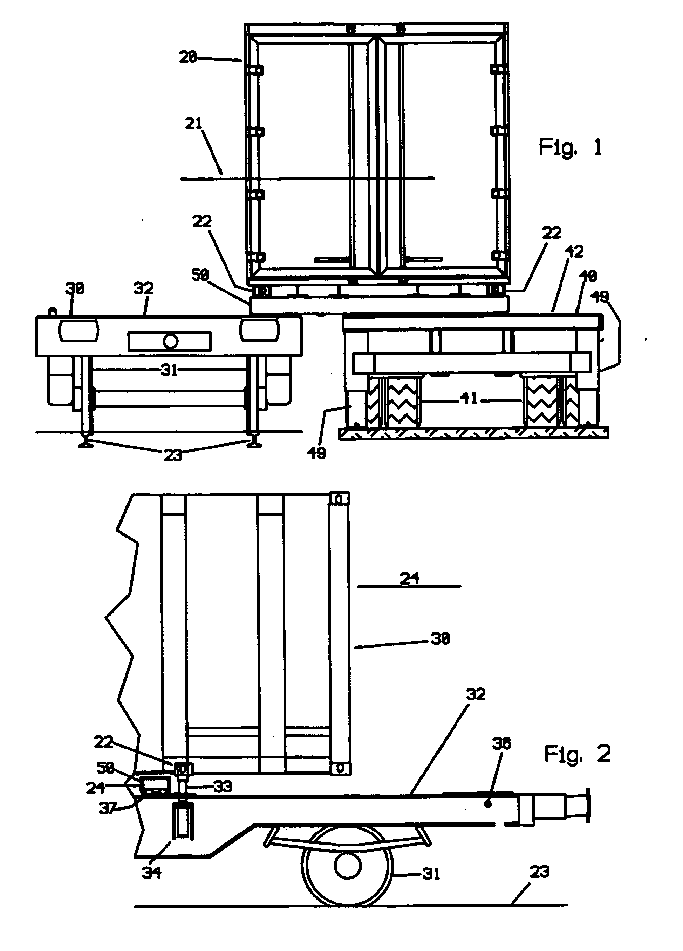

In Fig. 1 ist schematisch ein Container 20 gezeigt, der quer zu seiner Transportrichtung, der Verschieberichtung 21 von einem Waggon 30 als Transporteinrichtung auf einen parallel zu diesem stehenden Lastkraftwagen 40 als Transporteinrichtung mittels eines Verschubträgers 50 bewegt werden kann, auf dessen Oberseite die CCS 22 des Containers 20 aufliegen.

Der Waggon 30 steht mit seinen Schienenrädern 31 auf schematisch dargestellten Schienen 23 und ist mit einer Ladebereichsebene 32 versehen.

Der in Fig. 1 schematisch als Rückansicht dargestellte Lastkraftwagen 40 weist Räder 41 sowie ausfahrbare Standstützen 49 sowie übliche Träger mit einer Ladebereichsebene 42 auf.

Das erfindungsgemässe System besteht in der speziellen Ausgestaltung des Verschubträgers 50, die nachfolgend noch beschrieben werden wird, sowie der Modifikation von Waggon und Lastkraftwagen als Transporteinrichtung dergestalt, dass diese mit einem Vertikalhubgerät ausgestattet werden, dessen Vertikalhubteil an den CCS angreift und über das CC den Container oder dergleichen anheben kann, was den ausserordentlichen Vorteil mit sich bringt, dass die Container nicht geändert werden können, sondern handelsübliche Container wie Standard-, Spedition- sowie Übersee-Container und Wechselbehälter nach UGCISO sowie Wechselbrücken Einsatz finden können. Die Modifikationen der Transporteinrichtung werden nachfolgend beschrieben.

So ist in Fig. 2, die eine Seitenansicht des Waggons 30 zeigt, mit einer an dem CC des Containers 30 angreifenden Vertikalhubteil 33 eines insgesamt mit 34 bezeichneten Vertikalhubgerät versehen. Im in Fig. 2 gezeigten angehobenen Zustand des Containers 30 kann der Verschubträger 50 so neben die vorderen oder hinteren Paare von CC angesetzt und dann in Verschieberichtung, die quer, vorzugsweise rechtwinklig zur Transportrichtung 24 verläuft, unter den Container, also unter dessen vorderes und unter dessen hinteres Paar CC gebracht werden. Entweder kann jeder Verschubträger kürzer als der Abstand der einzelnen CCS jedes Paars bemessen sein, wobei lediglich an der Transporteinrichtung (also dem Waggon) und dem Lastkraftwagen sichergestellt sein muss, dass sich die Ladebereichsebene 32, 42 bis in den Bereich neben dem vorderen und dem hinteren Paar CCS erstreckt, wo der Verschubträger zunächst abgesetzt wird, bevor er parallel zur Transportrichtung 24 und quer zu seiner Verschieberichtung 21 genau unter den die zwei CCS jedes Paars auf der Unterseite des Containers verbindenden Trägers platziert wird. In diesem Bereich ist der Container besonders stabil konstruiert und dafür vorbesehen, in diesem Bereich Kräfte aufzunehmen. Es ist aber auch möglich, des Verschubträger länger als den Abstand der einzelnen CCS jeden Paars zu bemessen. Dann muss er nur entsprechend geformte Ausnehmer aufweisen, was aber noch nachfolgend beschrieben wird.

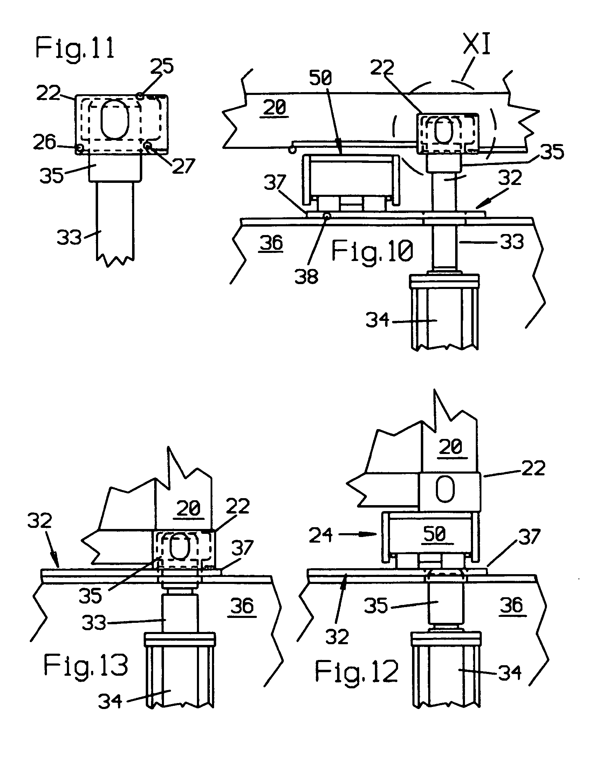

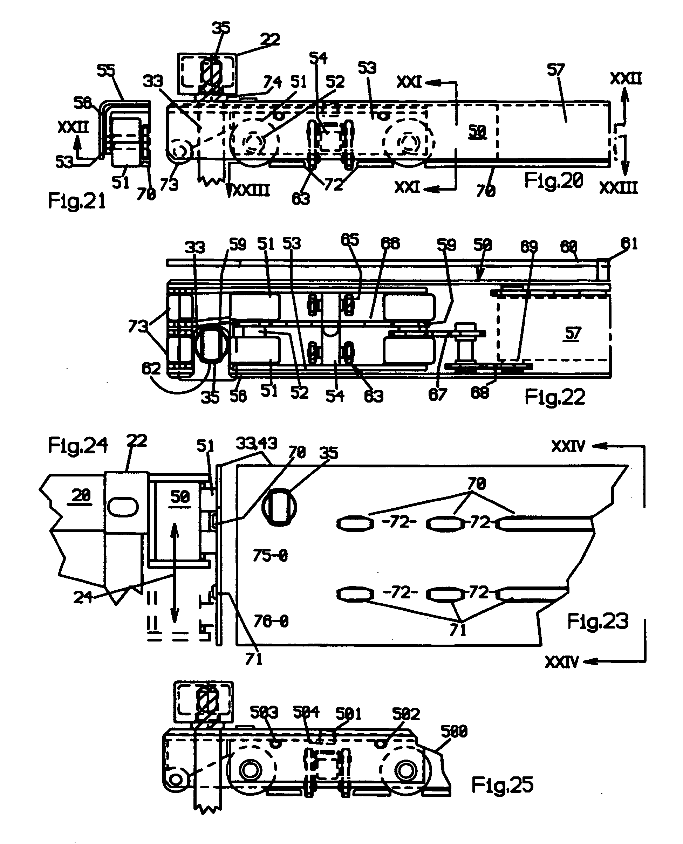

In das Vertikalhubgerät 34 des Waggons 30 ist hierbei als an die Versorgung der Transporteinrichtung angeschlossener Vertikalhubzylinder, vorzugsweise als hydraulischer oder pneumatischer Zylinder ausgebildet, wo es in den Fig. 10 bis 13 dargestellt ist, deren Beschreibung an dieser Stelle vorgezogen wird. Der Zapfen 35 weist dabei eine von der Kreisform abweichenden Querschnitt auf und kann durch Verdrehen um vorzugsweise 90° formschlüssig im CC 22 verriegelt werden. Der Zapfen 35 ist beim wiedergegebenen Ausführungsbeispiel (Fig. 10 bis 13) als an dem Deckel 25 des CC 22 angreifend ausgebildet. Es ist aber auch möglich, den Zapfen 35 mit einem umlaufenden Bund 74 (Figur 20) und damit zum Angriff an den Boden 26 im Bereich um die Eintrittsöffnung 27 des CC herum ausgebildet sein.

Zur Erzielung einer biegesteifen Ladebereichsebene 32 ist die Transporteinrichtung, zum Beispiel der Waggon 30, auf dessen beiden zueinander parallelen Längsträgern 36 sowie zwischen den hinteren sowie dem vorderen Paar der an dem hinteren beziehungsweise dem vorderen Paar der CCS 22 an der Unterseite des Containers 20 angreifenden Vertikalhubteile 33 der Vertikalhubgeräte 34, wie in Fig. 10 gezeigt, je ein die Ladebereichsebene 32 bildendes Konsolblech 37 vorgesehen und dient zum Aufsetzen des Verschubträgers 50 zunächst einmal in der Nähe des vorderen oder hinteres Paars der CCS 22. Bei entsprechender Länge des Konsolblechs 37 ist dieses mit Öffnungen 38 für den Durchtritt der Vertikalhubteile versehen und kann sich, um das seitliche Ansetzen des Verschubträgers 50 (wie in Fig. 10 gezeigt) zu vereinfachen bis in diesen angrenzenden Bereich der Ladebereichsebene 32 erstrecken. In Fig. 10 ist der mittels des Vertikalhubgerätes 34 angehobene Zustand des Containers 20 mit seitlich angesetztem Verschubträger 50 auf dem bis dahin reichenden Konsolblech 37 gezeigt. Fig. 12 zeigt nunmehr den in Verschieberichtung 24 unter das CC 22 verschobenen Verschubträger 50, wonach der das freie Ende des Vertikalhubteils 33 des Vertikalhubgerätes 34 bildende Zapfen 35 vollständig bis unter die Ladebereichsebene 32 eingezogen worden ist und damit nicht nur störend für den Verschubträger 50 aus der Ladebereichsebene 32, also der Oberseite des Konsolblechs 37 hervorragt. Somit kann der Verschubträger 50 den aufgesattelten Container 20 in Verschieberichtung 21 quer zur Transportrichtung 24 in Richtung Lastkraftwagen (nicht gezeigt) transportieren.

Im zum Zwecke des Transports im aufgesattelten Zustand des Containers 20 kann dieser über die CCS und den Zapfen 35, der über die Ladebereichsebene 32 hervorstehende Zapfen 35 als Halterung gegen Verschieben des Containers während des Transports Verwendung finden. Werden die Zapfen innerhalb der CCS gedreht und das Vertikalhubteil 33 entsprechend formschlüssig arretiert, so kann der Waggon nach Art eines Twist Locks auch bei Waggons als Transporteinrichtung, was bislang nicht der Fall ist, verwendet werden.

Es folgt nachfolgend die Beschreibung der Modifikation für einen Lastkraftwagen als Transporteinrichtung, wobei die nachfolgenden Ausführungen auch für die Waggons als Transporteinrichtung und umgekehrt gelten.

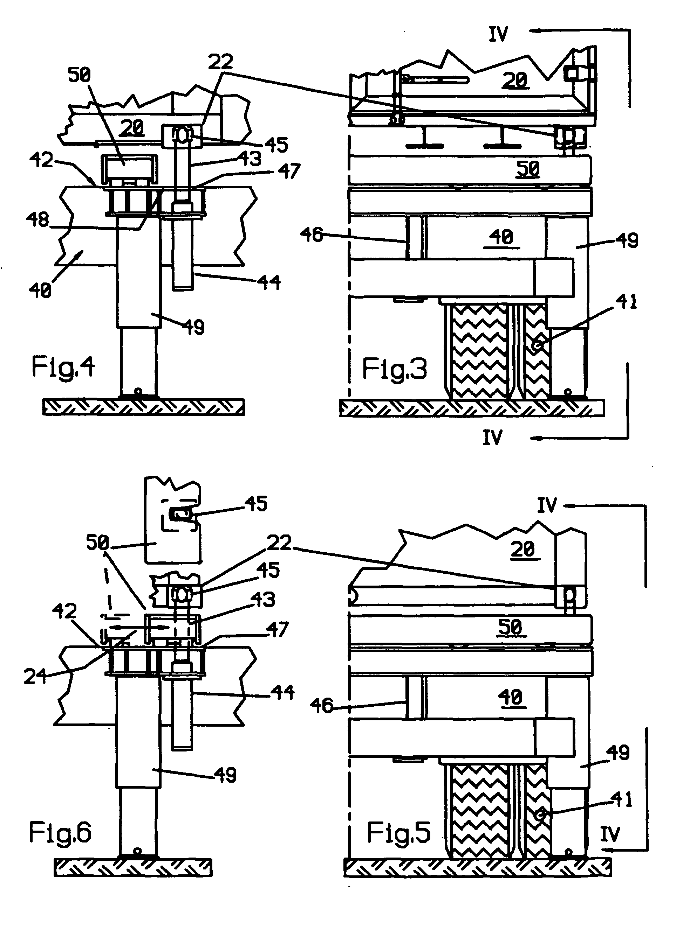

In Fig. 3 ist der auf dem Lastkraftwagen 40 befindliche Container 20 von einem Vertikalhubteil 43 eines Vertikalhubgerätes 44 angehoben, das als an die Versorgung der Transporteinrichtung in Form des Lastkraftwagens angeschlossener Vertikalhubzylinder ausgebildet ist. Dieser kann ein hydraulischer oder pneumatischer Zylinder sein, auf dessen Kolbenstange als Vertikalhubgerät ein an den CC 22 eingreifender Zapfen 45 angeordnet ist. Dieser kann, wie bereits im Zusammenhang mit dem Waggon 30 beschrieben, im Querschnitt von der Kreisform abweichen und durch Verdrehen (Twist-Lock) im CC formschlüssig verriegelt werden, wobei der Zapfen entweder zum Angriff an den Deckel 25 des CC 22 ausgebildet ist, oder aber einen umlaufenden Bund zum Angriff an dem Boden 26 im Bereich um die Eintrittsöffnung 27 des CC 22 herum aufweist.

Hierbei ist der Lastkraftwagen als Transporteinrichtung auf seinen beiden zueinander parallelen Längsträgern 46 sowie zwischen dem hinteren sowie dem vorderen Paar, der an dem hinteren beziehungsweise dem vorderen Paars der CCS 22 an der Unterseite des Containers 20 angreifenden Vertikalhubteile 43 der Vertikalhubgeräte 44 mit je einem die Ladebereichsebene 42 bildenden Konsolblech 47 für das Aufsetzen des Verschubträgers 50 versehen, welches Öffnungen 48 für den Durchtritt der Vertikalhubteile 43 aufweist und sich bis in einen Bereich unmittelbar daneben im Bereich des vorderen sowie hinteren Paares der CCS 22 für das seitliche Ansetzen des Verschubträgers (50) erstreckt, wie schematisch in Figur 4 gezeigt ist. Insoweit zeigen Figuren 3 und 4 den Augenblick des seitlichen Ansetzens des Verschubträgers 50 neben den den Container 20 in angehobenem Zustand haltenden Vertikalhubteilen, wie es im Bezug auf den Waggon bereits in den Fig. 10 und 11 beschrieben worden ist.

Die Figuren 5 und 6 zeigen demgegenüber den zwar noch angehobenen Zustand des Containers 20; der Verschubträger 50 ist aber schon mit einem Querschub parallel zur Transportrichtung 24 unter die CCs 22 gebracht worden. Nachdem bei dieser Ausgestaltung der Verschubträger 50 länger als der Abstand der einzelnen CCS des vorderen oder hinteren Paars derselben ist, muss er mit der eingangs schon erwähnten Ausnehmung 62 versehen sein.

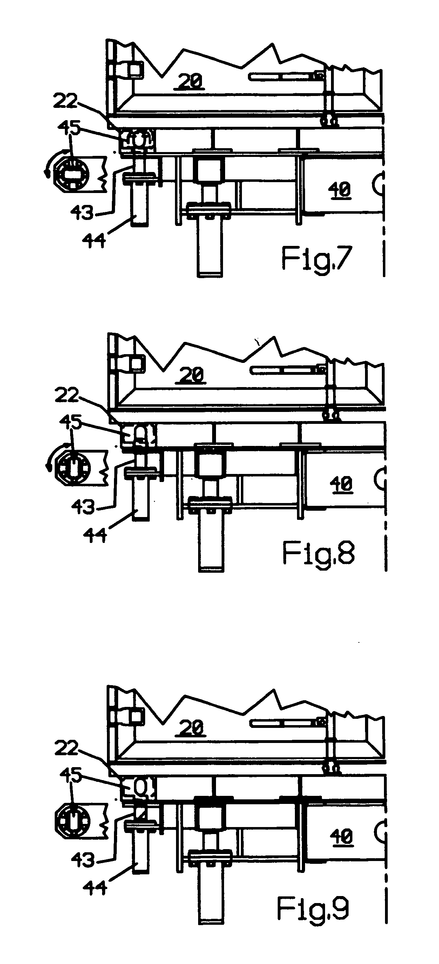

Demgegenüber zeigen die Fig. 7, 8 und 9 den schon in seine Endstellung gebrachten Container 20 auf dem Lastkraftwagen 40 und schon wegtransportiertem Verschubträger 50. Unmittelbar nachdem also der Container 20 auf der Ladebereichsebene 42, also der Oberseite des Konsolblechs 47 abgesetzt worden ist, wird der unter die Ladebereichsebene 42 abgesenkte Zapfen 45 (Fig. 9) durch die Öffnung des CC 22 in denselben hineinbewegt, wie in Fig. 8 gezeigt ist. Im vollständig ausgefahrenen Zustand (Fig. 7) wird der Zapfen 45 um 90° gedreht und dabei der sogenannte Twist Lock, das Niederhalten des Containers 20 auf der Ladebereichsebene 42 des Lastwagens 40, bewirkt. Der in Fig. 7 dargestellte Fahrzustand des aufgesattelten Containers 20 auf dem Lastkraftwagen 40 ist hergestellt.

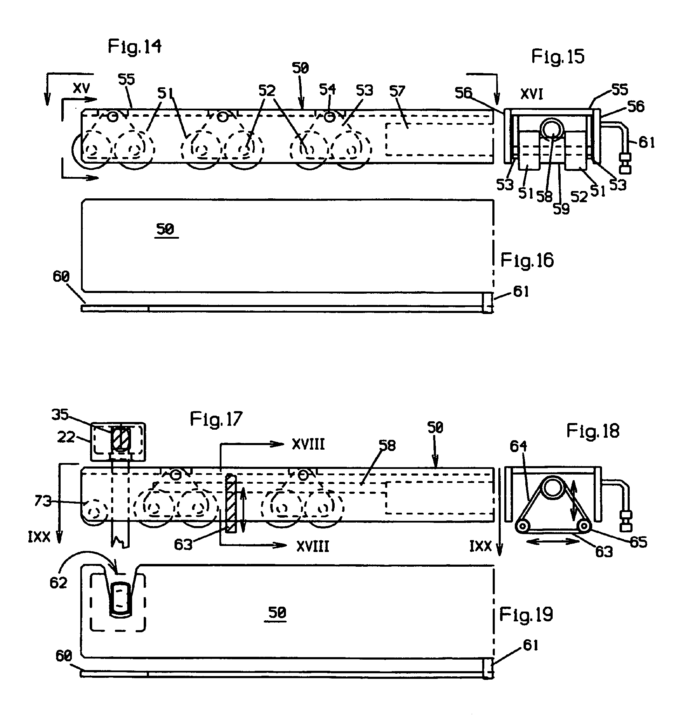

Der Verschubträger 50 (Figuren 14 bis 19) ist in etwa balkenförmig längs seiner Verschieberichtung 21 ausgebildet und weist eine Vielzahl von auf Achsen 52 gelagerter Rollen 51 auf. Hierbei sind zwei nebeneinander angeordnete Rollen 51 auf derselben Achse 52 angeordnet. Jedes der beiden Enden der Achse 52 ist dabei in je einem Winkelhebel 53 gelagert, und zwar dergestalt, dass die der einen Seite zugewandten Enden der Achsen 52 an den beiden Enden des einen Winkelhebels und die beiden, der anderen Seite zugewandten Enden der Achsen 52 an den beiden Winkelenden des anderen Winkelhebels und jeder Winkelhebel 53 im Bereich des Scheitels seines Winkels an dem Verschubträger 50 mittels einer Halteachse 54 angelenkt ist, die an der Innenseite des (im Querschnitt ein umgekehrtes U bildenen) U-Stegs 55 des Verschubträgers 50 angeordnet ist. Hierbei verlaufen die Achsen 52 und die Halteachse 54 parallel zueinander und parallel zur Transportrichtung 25 sowie rechtwinklig zur Verschieberichtung 21. Hierbei bilden die vier an dem Paar Achsen 52 zwischen einem Paar Winkelhebel 53 angeordneten Rollen 51 einen Rollensatz, mit dem eine Unebenheiten auf der Ladebereichsebene 32, 42 kompensierende Pendellagerung erreicht wird. Die beiden Winkelhebel 53 eines Rollensatzes weisen zwischen sich die Rollen 51 auf und verlaufen parallel zu den beiden zueinander parallelen und durch den die Oberseite des Verschubträgers 50 bildenden U-Steg 55 verbundenen beiden U-Schenkeln 56. Von den Rollensätzen sind mehrere, vorzugsweise drei oder mehr vorgesehen.

In dem Verschubträger 50 ist ein insgesamt mit 57 bezeichneter, als Elektromotor mit einem von diesem angetriebenen Getriebe ausgebildeten Antrieb vorgesehen, von dem eine Welle 58 angetrieben ist, die an ihrer Oberseite mit einer Schneckenverzahnung ausgebildet ist. Zwischen den an den beiden Enden einer der Achsen 52 angeordneten Rollen 51 ist, wie in Fig. 15 gezeigt, ein mit diesen starr verbundener Zahnkranz 59 vorgesehen, der mit der Schneckenverzahnung der Welle 58 des Antriebs 57 kämmt. Durch diese Ausbildung können ansonsten für das Verschieben auf abschüssigem Gelände notwendige Bremsen an dem Verschubträger 50 entfallen, was den Antrieb einfacher und sicherer macht, weil bei dieser Anordnung der Antrieb durch die Schneckenverzahnung auf einen Zahnkranz in Richtung von dem Antrieb 57 zu der Rolle 51, nicht aber umgekehrt erfolgen kann.

Der Elektromotor des Antriebes 57 ist an einen seitlich an den Verschubträger 50, zum Eingriff in eine Stromschiene 60 ausgebildeter Stromabnehmer 61 versehen, was den Vorteil in sich birgt, dass der Verschubträger 50 nicht, wie beim Stand der Technik üblich an die Hydraulikversorgung eines Lastkraftwagens gebunden ist, sondern darüber hinaus beispielsweise auch an die elektrische Versorgung eines Waggons angeschlossen werden kann, was den Einsatz vielfältiger gestaltet. Wichtig ist nur, eine Stromschiene 60 an der betreffenden Transporteinrichtung vorzusehen.

Wird bei der ersten Ausführungsform gemäss Fig. 14 ein Verschubträger 50 mit einer relativ kurzen Länge verwendet, der kürzer als der Abstand der einzelnen CCs jedes Paars (vorderer oder hinterer) CCs bemessen ist, ist die zweite Ausführungsform jener Verschubträger gemäss Figur 17 demgegenüber länger ausgebildet. Zu diesem Zweck weist er für den Querschub unter den die vorderen und hinteren Paare von CCs verbindenden Bereich zwei in dessen einer Seite, d.h. den einen der beiden U-Schenkel 56 mündende, von der Ober- bis zur Unterseite des Vorschubträgers 50 reichende, an die Form der Vertikalhubteile 33, 43 des Vertikalhubgeräts 34, 44 angepasste Ausnehmungen 62 auf, wie dies am besten aus Fig. 19 ersichtlich ist. Die Ausnehmungen 62 sind auch ausserhalb eines Rollensatzes angeordnet.

Ausserdem ist der Verschubträger 50, wie schematisch in Fig. 18 ersichtlich, zu dessen Bewegung (mit einem parallel zu der Transportrichtung 24 verlaufenden Querschub) zwischen (und auf) die Ladebereichsebene 32, 42 der betreffenden Transporteinrichtung 30, 40 und (auch unter) das bezüglich der Transportrichtung 24 vordere und das hintere Paar der CCs 22 bei angehobenem Container 20 mit zwei voneinander beabstandet angeordneten, anheb- und absenkbaren Querschubvorrichtungen 63 versehen, die je zwei Räder 64, 65 aufweisen, deren Achsen parallel zu der Verschieberichtung 21 verlaufen.

Bei der dritten Ausführungsform des Verschubträgers 50 ist jeder Zahnkranz 59 mit einer Kette 66 angetrieben,wobei ein Kettenzug 67,68 zu einem Antriebsritzel 69 des Antriebs 57 geführt ist, der mit einem Schneckengetriebe versehen ist. Ausserdem kann er an jedem Ende mit nicht angetriebenen Stützrollen 73 versehen sein.

Bei dieser Ausfürungsform sind, wie in Figur 25 näher gezeigt und im Zusammenhang damit erläutert, die die vier an dem Paar Achsen 52 angeordneten Rollen 51 eines Rollensatzes an den beiden Wangen eines im Querschnitt U-förmigen, nach unten offenen Rollenbockes 500 -anstelle des Paars Winkelhebels- angeordnet, der auf seiner Oberseite eine Vertikalbolzen 504 aufweist, der in eine entsprechende Ausnehmung 501 an der Innenseite des (im Querschnitt ein umgekehrtes U bildenen) U-Stegs 55 des Verschubträgers 50 eingreift. Jeder Rollenbock 500 ist mittels zweier, an den beiden U-Schenkeln 56 festgelegten Lagerbolzen 502, 503 mit Spiel schwimmend gelagert, die an der Unterseite seines U-Steges anliegen. Dadurch ist der Rollenbock 500 um den Vertikalbolzen 504 in gewissem Mass drehbar.

Auch kann, wie in den Figuren 23 und 24 (in letzterer mit dem Veschubträger 50) dargestellt, das Konsolblech 33,43 zwecks Führung des Verschubträgers 50 zumindest einen, vorzugsweise zwei zueinander parrallele Führungssteg(e) 70,71 aufweisen, dessen Breite auf den Abstand der zwei Rollen 51 auf derselben Achse 52 bestimmt ist. Der eine Führungssteg 70 dient zur Führung des Verschubträgers 50 mit aufgesetztem Container 20, der andere (71) hingegen dazu, den Verschubträger 50 parallel dazu zu führen. Bei der Ausführungsform mit dem Rollenbock 500 wird dabei eine gewisse Lenkbarkeit um den Vertikalbolzen 504 erreicht. Hierbei wird der Verschubträger 50 unter den noch nicht aufgesattelten Container bewegt. Um dann den Querschub -von einer Zwischenstellung unterhalb des Containers, also von innen nach aussen- unter den angehobenen Container ausführen zu können, müssen beide Führungsstege 70,71 eine Unterbrechung 72 für die Räder 65 der Querschubvorrichtung 63 aufweisen. Erst wenn der Verschubträger 50 dann seine Arbeitslage erreicht hat, wird der Container 20 angehoben.

In der Konsole 33,43 ist ferner zwecks Signalisierung des Erreichens der Arbeitslage jedem Führungssteg 70,71 zumindest ein Kontaktgeber 75 bzw. 76 vorgesehen, der mit entsprechenden -nicht gezeigten- Kontaktnehmern des Verschubträgers 50 zum Steuern des Antriebes 57 sowie Ansteuern der Querschubvorrichtung 63 zusammenwirkt.

Hierbei genügt die den Elektromotor des Antriebs 57 antreibende Gleichspannung (DC) als einzige Versorgung. Über hochfrequente Steuersignale können dann, wie an sich bekannt, davon gesteuerte Schalter die Gleichspannung zu- oder abgeschalten.

## Patentansprüche

1. Einrichtung zum quer zur Transportrichtung (24) erfolgenden Auf- und Abladen von auf einer Transporteinrichtung (30,40) befindlichen Befülleinrichtung (20), die über vier sogenannte Corner Castings (nachfolgend: CC) an ihrer Unterseite auf der Ladebereichsebene (32,42) der Transporteinrichtung (30,40) wie Waggon (30) oder Lastkraftwagen (40) aufsetzbar und mittels an der Transporteinrichtung (30,40) vorgesehenen, den Container (20) über die CCs (22) anhebenden Vertikalhubteil (33,43) eines Vertikalhubgerätes (34,44) anhebbar sind, wobei die Einrichtung einen Antrieb aufweist und als bei angehobener Befülleinrichtung in Transportrichtung (24) zwischen der Ladebereichsebene (32,42) der Transporteinrichtung (30,40) und das bezüglich der Transportrichtung (24) vordere und das hintere Paar der CCs (22) parallel zu der Transportrichtung (24) und nach Absenken des Vertikalhubteiles (32,42) vollständig unter die Ladebereichsebene (32,42) bringbar, nach dem Absenken an den CCs (22) angreifend und zum translatorischen Transport der aufgesetzten Befülleinrichtung (20) in Verschieberichtung (21) quer zu der Transportrichtung (24) mittels des Antriebes (57) ausgebildet ist, wobei bei dem Vertikalhubgerät (34,44) der Vertikalhubzylinder als hydraulischer oder pneumatischer Zylinder ausgebildet ist, auf dessen als Kolbenstange ausgebildetem Vertikalhubteil (32,42) ein an dem Deckel (25) oder dem Boden (26) des CCs (22) an- bzw. eingreifender Zapfen angeordnet ist.

2. Einrichtung nach Anspruch 1, **dadurch gekennzeichnet, dass** die Befülleinrichtung als Container (20) ausgebildet ist.

3. Einrichtung nach Anspruch 1 oder 2, **dadurch gekennzeichnet** durch die Einrichtung als Verschubträger.

4. Einrichtung nach einem der Ansprüche 1 bis 3, **dadurch gekennzeichnet, dass** der Verschubträger (50) zu dessen mit einem parallel zu der Transportrichtung (24) verlaufenden Querschub bei angehobenem Container (20) erfolgenden Plazierung zwischen die Ladebereichsebene (32,42) der Transporteinrichtung (30,40) und das bezüglich der Transportrichtung (24) vordere oder hintere Paar der CCs (22) zwei in dessen einer Seite mündende, von der Oberbis zur Unterseite reichende, an die Form der Vertikalhubteile (33,43) des Vertikalhubgerätes (34,44) angepasste Ausnehmungen (62) aufweist.

5. Einrichtung nach einem der Ansprüche 1 bis 4, **dadurch gekennzeichnet, dass** der Verschubträger (50) eine Vielzahl von dem Antrieb (57) angetriebener Rollen (51) aufweist.

6. Einrichtung nach Anspruch 5, **dadurch gekennzeichnet, dass** bei dem Verschubträger (50) die beiden Enden der zwei voneinander beabstandete Rollen (51) aufweisenden Achse (52) an zwei voneinander beabstandeten sowie zueinander parallelen und im Bereich des Scheitels ihres Winkels an dem Verschubträger (50) angelenkten Winkelhebeln (53) festgelegt sind und dass zwecks Bildung eines Rollensatzes an jedem der beiden Enden jedes Winkelhebels (53) je eine der Achsen (52) mit den Rollen (51) angeordnet ist, wobei alle Achsen parallel zur Transportrichtung (24) und rechtwinklig zur Verschieberichtung (21) verlaufen.

7. Einrichtung nach Anspruch 5, **dadurch gekennzeichnet, dass** bei dem Verschubträger (50) die beiden Enden der zwei voneinander beabstandete Rollen (51) aufweisenden zwei Achsen (52) an den beiden Wangen eines im Querschnitt U-förmigen, nach unten offenen Rollenbockes (500) festgelegt sind und einen Rollensatz bilden, der auf seiner Oberseite eine Vertikalbolzen (504) aufweist, der in eine entsprechende Ausnehmung (501) an der Innenseite des U-Stegs (55) des Verschubträgers (50) eingreift.

8. Einrichtung nach Anspruch 6, **dadurch gekennzeichnet, dass** bei dem Verschubträger (50) die beiden Rollen (51) auf der Achse (52) mit zumindest einem zwischen ihnen angeordneten Zahnkranz (59) starr verbunden sind.

9. Einrichtung nach Anspruch 8, **dadurch gekennzeichnet, dass** der Zahnkranz (59) mit einer von dem Antrieb (57) angetriebenen Schnecke kämmt.

10. Einrichtung nach Anspruch 8 oder 9, **dadurch gekennzeichnet, dass** bei dem Verschubträger (50) die von dem Antrieb (57) angetriebene Welle (58) an ihrem Umfang mit der Schnecke versehen sind.

11. Einrichtung nach einem der Ansprüche 8 oder 9, **dadurch gekennzeichnet, dass** zumindest einer der Zahnkränze (59) über eine, vorzugsweise über ein Antriebsritzel (69) an dem Antrieb (57) angetriebene Kette (68) angetrieben ist.

12. Einrichtung nach Anspruch 11, **dadurch gekennzeichnet, dass** die beiden Zahnkränze (59) eines Rollensatzes über eine Kette (66) miteinander angetrieben sind.

13. Einrichtung nach einem der Ansprüche 1 bis 12, **dadurch gekennzeichnet, dass** bei dem Verschubträger (50) der Antrieb (57) einen Elektromotor sowie ein von diesem angetriebenes Getriebe aufweist.

14. Einrichtung nach Anspruch 13, **dadurch gekennzeichnet, dass** bei dem Verschubträger (50) seitlich ein zum Eingriff in eine Stromschiene (60) ausgebildeter Stromabnehmer (61) für den Elektromotor vorgesehen ist.

15. Einrichtung nach einem der Ansprüche 1 bis 14, **dadurch gekennzeichnet, dass** der Verschubträger (50) zu dessen Bewegung (mit einem parallel zu der Transportrichtung (24) verlaufenden Querschub) zwischen der Ladebereichsebene (32,42) der Transporteinrichtung (30,40) und das bezüglich der Transportrichtung (24) vordere und das hintere Paar der CCs (22) bei angehobenem Container (20) mit zwei voneinander beabstandeten, anheb- und absenkbaren Querschubvorrichtungen (63) versehen ist.

16. Einrichtung nach Anspruch 15, **dadurch gekennzeichnet, dass** bei dem Verschubträger (50) die beiden anheb- und absenkbaren Querschubvorrichtungen (63) je zwei Räder (64, 65) aufweisen, deren Achsen parallel zu der Verschieberichtung verlaufen.

17. Einrichtung zum in Transportrichtung (24) erfolgenden Transport einer aufgesetzten Befülleinrichtung (20) mit einem diese über CCs (22) anhebenden und nach dem Ablassen vollständig unter die Ladebereichsebene (32,42) absenkbaren Vertikalhubteil (33,43) eines Vertikalhubgerätes (34,44), **dadurch gekennzeichnet, dass** bei dem Vertikalhubgerät (34,44) der Vertikalhubzylinder als hydraulischer oder pneumatischer Zylinder ausgebildet ist, auf dessen als Kolbenstange ausgebildetem Vertikalhubteil (32,42) ein an dem Deckel (25) oder dem Boden (26) des CCs (22) an- bzw. eingreifender Zapfen angeordnet ist.

18. Einrichtung nach einem der Ansprüche 1 bis 17, **dadurch gekennzeichnet, dass** die Vertikalhubgeräte (34,44) sowohl relativ zueinander als auch bezüglich dem Anbringungsort der Transporteinrichtung versetzbar sind.

19. Einrichtung nach einem der Ansprüche 1 bis 18, **dadurch gekennzeichnet, dass** das Vertikalhubgerät (34,44) als an die Versorgung der Transporteinrichtung (30,40) angeschlossener Vertikalhubzylinder oder eine von einem Ölmotor angetriebene Gewindespindel ausgebildet ist.

20. Einrichtung nach Anspruch 17, **dadurch gekennzeichnet, dass** bei dem Vertikalhubgerät (34,44) der Zapfen im Querschnitt von der Kreisform abweicht und durch Verdrehen im CC (22) formschlüssig verriegelt festlegbar ist.

21. Einrichtung nach Anspruch 17, **dadurch gekennzeichnet, dass** bei dem Vertikalhubgerät (34,44) der Zapfen zum Angriff an dem Deckel (25) des CC (22) ausgebildet ist

22. Einrichtung nach Anspruch 17, **dadurch gekennzeichnet, dass** bei dem Vertikalhubgerät (34,44) der Zapfen einen umlaufenden Bund (74) zum Angriff an dem Boden (26) im Bereich um die Eintrittsöffnung (27) des CC (22) herum ausgebildet ist.

23. Einrichtung nach einem der Ansprüche 1 bis 22, **dadurch gekennzeichnet, dass** bei einer Transporteinrichtung (30,40) auf deren beiden zueinander parallelen Längsträgern (36,46) sowie zwischen den hinteren sowie dem vorderen Paar der an dem hinteren bzw. dem vorderen Paar der CCs (22) an der Unterseite des Containers (20) angreifenden Vertikalhubteile (33,43) der Vertikalhubgeräte (34,44) je ein die Ladebereichsebene (32,42) bildendes Konsolblech (37,47) für das Aufsetzen des Verschubträgers (50) vorgesehen ist.

24. Einrichtung nach einem der Ansprüche 1 bis 23, **dadurch gekennzeichnet, dass** das Konsolblech (37,47) mit Öffnungen (38,48) für den Durchtritt der Vertikalhubteile (33,43) versehen ist.

25. Einrichtung nach einem der Ansprüche 1 bis 24, **dadurch gekennzeichnet, dass** bei einer Transporteinrichtung (30,40) auf deren beiden zueinander parallelen Längsträgern (36,46) das im Bereich des vorderen sowie hinteren Paars von CCs (22) jeweils die Ladebereichsebene (32,42) bildende Konsolblech (37,47) für das seitliche Ansetzen des Verschubträgers (50) vorgesehen ist.

26. Einrichtung nach einem der Ansprüche 1 bis 25, **dadurch gekennzeichnet, dass** bei einem Waggon oder Lastkraftwagen als Transporteinrichtung (30,40) eine an deren elektrisches Bordnetz anschliessbare Stromschiene (60) zur Aufnahme des Stromabnehmers (61) des Verschubträger (50) vorgesehen ist.

27. Einrichtung nach einem der Ansprüche 1 bis 26, **dadurch gekennzeichnet, dass** das Konsolblech (33,43) auf den beiden zueinander parallelen Längsträgern (36,46) der Transporteinrichtung (30,40) längs diesen verschieb- oder versetzbar ist.

## Claims

1. Device for the loading and unloading, in a direction transverse to the transport direction (24), of container units (20) disposed on a transport unit (30, 40), which container units can be positioned, via four so-called corner castings (referred to below as CCs) on their underside, on the loading plane (32, 42) of the transport unit (30, 40), for example, a wagon (30) or heavy-goods vehicle (40), and which can be raised by means of a vertical-lifting element (33, 43) of a vertical-lifting device (34, 44) provided on the transport unit (30, 40), which lifts the container (20) via the CCs (22),
wherein the device provides a drive and is designed to be introduced in the transport direction (24), with the container unit raised, between the loading plane (32, 42) of the transport unit (30, 40) and, with reference to the transport direction (24), the front and the rear pair of CCs (22) parallel to the transport direction (24), and, after the lowering of the vertical-lifting element (32, 42) completely below the loading plane (32, 42), to engage with the CCs (22), after lowering, for the translational transport of the positioned container unit (20) by means of the drive (57) in the displacement direction (21) transverse to the transport direction (24),
wherein, with regard to the vertical-lifting device (34, 44), the vertical-lifting cylinder is designed as a hydraulic or pneumatic cylinder, wherein a pin engaging with or in the cover (25) or the base (26) of the CCs (22) is disposed on its vertical-lifting element (32, 42), which is designed as a piston rod.

2. Device according to claim 1,
**characterised in that**
the container unit is designed as a container (20).

3. Device according to claim 1 or 2,
**characterised in that**
the device is a displacement girder.

4. Device according to any one of claims 1 to 3,
**characterised in that,**
for its positioning, implemented, with a raised container (20), via a transverse displacement extending parallel to the transport direction (24) between the loading plane (32, 42) of the transport unit (30, 40) and the front or rear pair of CCs (22) with reference to the transport direction (24), the displacement girder (50) provides two recesses (62) opening into its one side, extending from the upper side to the lower side and adapted to the shape of the vertical-lifting elements (33, 43) of the vertical-lifting device (34, 44).

5. Device according to any one of claims 1 to 4,
**characterised in that**
the displacement girder (50) provides a plurality of rollers (51) driven by the drive (57).

6. Device according to claim 5,
**characterised in that,**
with regard to the displacement girder (50), the two ends of the axis (52) providing the two rollers (51) spaced at a distance from one another, are attached to two mutually-parallel, rectangular levers (53) spaced at a distance from one another and connected in an articulated manner in the region of the apex of their angle to the displacement girder (50), and that respectively one of the axes (52) with the rollers (51) is disposed at each of the two ends of every rectangular lever (53) for the purpose of forming a roller set, wherein all of the axes extend parallel to the transport direction (24) and at right angles to the displacement direction (21).

7. Device according to claim 5,
**characterised in that,**
with regard to the displacement girder (50), the two ends of the two axes (52) providing the two rollers (51) spaced at a distance from one another are attached to the two jaws of a roller block (500) open at its underside and with a U-shaped cross-section and form a roller set, which provides at its upper side a vertical bolt (504), which engages in a corresponding recess (501) on the internal side of the U-web (55) of the displacement girder (50).

8. Device according to claim 6,
**characterised in that,**
with regard to the displacement girder (50), the two rollers (51) are rigidly connected to the axis (52) with at least one crown gear (59) disposed between them.

9. Device according to claim 8,
**characterised in that**
the crown gear (59) engages with a worm gear driven by the drive (57).

10. Device according to claim 8 or 9,
**characterised in that,**
with regard to the displacement girder (50), the worm gear is provided on the periphery of the shaft (58) driven by the drive (57).

11. Device according to any one of claims 8 or 9,
**characterised in that**
at least one of the crown gears (59) is driven via a chain (68) preferably driven via a pinion gear (69) on the drive (57).

12. Device according to claim 11,
**characterised in that**
the two crown gears (59) of one roller set are driven together via a chain (66).

13. Device according to any one of claims 1 to 12,
**characterised in that,**
with regard to the displacement girder (50), the drive (57) provides an electric motor and a gearbox driven by the latter.

14. Device according to claim 13,
**characterised in that**
a power pickup (61) for the electric motor designed for engagement in a power rail (60) is provided at the side of the displacement girder (50).

15. Device according to any one of claims 1 to 14,
**characterised in that**
the displacement girder (50) is provided with two transverse-displacement devices (63) spaced at a distance from one another and capable of being raised and lowered for its movement with a raised container (20) (with a transverse displacement extending parallel to the transport direction (24)) between the loading plane (32, 42) of the transport unit (30, 40) and the front and the rear pair of CCs (22) with reference to the transport direction (24).

16. Device according to claim 15,
**characterised in that,**
with regard to the displacement girder (50), the two transverse-displacement devices (63) capable of being raised and lowered each provide two wheels (64, 65), of which the axes extend parallel to the displacement direction.

17. Device for the transport implemented in the transport direction (24) of a positioned container unit (20) with a vertical-lifting element (33, 43) of a vertical-lifting device (34, 44) lifting the latter via CCs (22) and capable of being lowered completely below the loading plane (32, 42) after lowering,
**characterised in that,**
with regard to the vertical-lifting device (34, 44), the vertical-lifting cylinder is designed as a hydraulic or pneumatic cylinder, wherein a pin engaging with or in the cover (25) or the base (26) of the CCs (22) is disposed on its vertical-lifting element (32, 42), which is designed as a piston rod.

18. Device according to any one of claims 1 to 17,
**characterised in that**
the vertical-lifting devices (34, 44) can be displaced both relative to one another and also with reference to the position of installation of the transport unit.

19. Device according to any one of claims 1 to 18,
**characterised in that**
the vertical-lifting device (34, 44) is designed as a vertical-lifting cylinder connected to the power supply of the transport unit (30, 40) or as a threaded spindle driven by an oil engine.

20. Device according to claim 17,
**characterised in that,**
with regard to the vertical-lifting device (34, 44), the cross-section of the pin deviates from a circular shape and can be locked in a form-fit manner by rotation within the CC (22).

21. Device according to claim 17,
**characterised in that,**
with regard to the vertical-lifting device (34, 44), the pin is designed for engagement with the cover (25) of the CC (22).

22. Device according to claim 17,
**characterised in that,**
with regard to the vertical-lifting device (34, 44), the pin is designed with a circumferential collar (74) for engagement on the base (26) in the region around the inlet opening (27) of the CC (22).

23. Device according to any one of claims 1 to 22,
**characterised in that,**
with regard to a transport unit (30, 40), a mounting plate (37, 47) forming the loading plane (32, 42) for the positioning of the displacement girder (50) is provided on each of its two, mutually-parallel longitudinal beams (36, 46) and between the rear and the front pair of the vertical-lifting elements (33, 43) of the vertical-lifting devices (34, 44) engaging on the rear or respectively front pair of CCs (22) on the underside of the container (20).

24. Device according to any one of claims 1 to 23,
**characterised in that**
the mounting plate (37, 47) is provided with openings (38, 48) for the through passage of the vertical-lifting elements (33, 43).

25. Device according to any one of claims 1 to 24,
**characterised in that,**
with regard to a transport unit (30, 40), the mounting plate (37, 47) respectively forming the loading plane (32, 42) in the region of the front and the rear pair of CCs (22) is provided for the lateral attachment of the displacement girder (50) on its two mutually-parallel longitudinal beams (36, 46).

26. Device according to any one of claims 1 to 25,
**characterised in that,**
with regard to a wagon or heavy-goods vehicle as the transport unit (30, 40), a power rail (60) capable of being connected to its onboard electrical network is provided to receive the power pickup (61) of the displacement girder (50).

27. Device according to any one of claims 1 to 26,
**characterised in that**
the mounting plate (33, 43) on the two mutually-parallel longitudinal beams (36, 46) of the transport unit (30, 40) can be shifted or displaced along the latter.

## Revendications

1. Dispositif destiné au chargement et au déchargement, effectués transversalement au sens du transport (24), d'un dispositif de remplissage (20) se trouvant sur un dispositif de transport (30, 40) qui peut être installé par l'intermédiaire de quatre éléments dits Corner Castings (ci-après CC) au niveau de sa face inférieure sur le plan de la zone de charge (32, 42) du dispositif de transport tel qu'un wagon (30) ou un véhicule utilitaire (40), et peut être soulevé au moyen d'un élément de levage vertical (33, 43) d'un appareil de levage vertical (34, 44) prévu sur le dispositif de transport (30, 40) et soulevant le conteneur (20) par l'intermédiaire des CC (22), le dispositif présentant un mécanisme d'entraînement et étant réalisé pour pouvoir être amené, lorsque le dispositif de remplissage est soulevé, dans le sens du transport (24), entre le plan de la zone de charge (32, 42) du dispositif de transport (30, 40) et la paire de CC (22) avant et arrière par rapport au sens du transport (24) parallèlement au sens du transport (24), et après la descente de l'élément de levage vertical (32, 42) entièrement sous le plan de la zone de charge (32, 42), venant en prise avec les CC (22) après la descente et pour le transport en translation du dispositif de remplissage (20) installé, dans un sens de déplacement (21) transversal au sens du transport (24) au moyen du mécanisme de commande (57), moyennant quoi concernant l'appareil de levage vertical (34, 44), le vérin de levage vertical est réalisé sous la forme d'un vérin hydraulique ou pneumatique présentant un élément de levage vertical (32, 42), réalisé sous la forme d'une tige de piston, sur lequel est disposé un pivot s'engageant sur et/ou dans le couvercle (25) ou le fond (26) du CC (22).

2. Dispositif selon la revendication 1, **caractérisé en ce que** le dispositif de remplissage est réalisé sous la forme d'un conteneur (20).

3. Dispositif selon la revendication 1 ou 2, **caractérisé en ce que** le dispositif est réalisé sous la forme d'un support de déplacement.

4. Dispositif selon une des revendications 1 à 3, **caractérisé en ce que** le support de déplacement (50) présente pour son positionnement, effectué selon une course transversale parallèle au sens du transport (24), lorsque le conteneur (20) est soulevé, entre le plan de la zone de charge (32, 42) du dispositif de transport (30, 40) et la paire de CC (22) avant ou arrière par rapport au sens du transport (24), deux évidements (62) débouchant dans une de ses faces, allant de la face supérieure à la face inférieure, adaptés à la forme des éléments de levage vertical (33, 43) de l'appareil de levage vertical (34, 44).

5. Dispositif selon une des revendications 1 à 4, **caractérisé en ce que** le support de déplacement (50) présente une pluralité de rouleaux (51) entraînés par le mécanisme d'entraînement (57).

6. Dispositif selon la revendication 5, **caractérisé en ce que** concernant le support de déplacement (50), les deux extrémités des deux axes (52) présentant les rouleaux (51) espacés l'un de l'autre sont fixées à deux leviers coudés (53) espacés l'un de l'autre ainsi que parallèles l'un à l'autre et articulés sur le support de déplacement (50) dans la zone du sommet de leur coude, et **en ce que** pour la formation d'un jeu de rouleaux, un des axes (52) portant les rouleaux (51) est disposé à chacune des deux extrémités de chaque levier coudé (53), tous les axes étant parallèles au sens du transport (24) et perpendiculaires au sens de déplacement (21).

7. Dispositif selon la revendication 5, **caractérisé en ce que** concernant le support de déplacement (50), les deux extrémités des deux axes (52) présentant les rouleaux (51) espacés l'un de l'autre sont fixées aux deux flasques d'un support à galets (500) ouvert vers le bas, de section en U, et forment un jeux de rouleaux qui présente sur sa face supérieure un boulon vertical (504) qui s'engage dans un évidement (501) correspondant sur la face intérieure de la bride en U (55) du support de déplacement (50).

8. Dispositif selon la revendication 6, **caractérisé en ce que** concernant le support de déplacement (50), les deux rouleaux (51) sont reliés rigidement sur l'axe (52) par au moins une couronne dentée (59) disposée entre eux.

9. Dispositif selon la revendication 8, **caractérisé en ce que** la couronne dentée (59) s'engrène avec une vis sans fin entraînée par le mécanisme d'entraînement (57).

10. Dispositif selon la revendication 8 ou 9, **caractérisé en ce que** concernant le support de déplacement (50), les arbres (58) entraînés par le mécanisme d'entraînement (57) sont munis de la vis sans fin sur leur circonférence.

11. Dispositif selon une des revendications 8 ou 9, **caractérisé en ce qu'**au moins une des couronnes dentées (59) est entraînée par l'intermédiaire d'une chaîne (68) entraînée de préférence par un pignon d'entraînement (69) prévu sur le mécanisme d'entraînement (57).

12. Dispositif selon la revendication 11, **caractérisé en ce que** les deux couronnes dentées (59) d'un jeu de rouleaux sont entraînées ensemble par l'intermédiaire d'une chaîne (66).

13. Dispositif selon une des revendications 1 à 12, **caractérisé en ce que** concernant le support de déplacement (50), le mécanisme d'entraînement (57) présente un moteur électrique ainsi qu'une transmission entraînée par ce dernier.

14. Dispositif selon une des revendications 1 à 12, **caractérisé en ce que** concernant le support de déplacement (50) est prévu un collecteur de courant (61) pour le moteur électrique, réalisé pour venir s'engager dans un rail de contact (60).

15. Dispositif selon une des revendications 1 à 14, **caractérisé en ce que** le support de déplacement (50), pour son mouvement (selon une course parallèle au sens du transport (24)) entre le plan de la zone de charge (32, 42) du dispositif de transport (30, 40) et la paire de CC (22) avant et arrière par rapport au sens du transport (24) lorsque le conteneur (20) est soulevé est muni de deux dispositifs de déplacement transversal (63) pouvant être soulevés et abaissés.

16. Dispositif selon la revendication 15, **caractérisé en ce que** concernant le support de déplacement (50), les deux dispositifs de déplacement transversal (63) pouvant être soulevés et abaissés présentent chacun deux roues (64, 65) dont les axes sont parallèles au sens du déplacement.

17. Dispositif destiné au transport s'effectuant dans le sens du transport (24) d'un dispositif de remplissage installé (20) comportant un élément de levage vertical (33, 43) d'un appareil de levage vertical (34, 44) soulevant ledit dispositif par l'intermédiaire de CC (22) et pouvant descendre après le vidage entièrement sous le plan de la zone de charge (32, 42), **caractérisé en ce que** concernant l'appareil de levage vertical (34, 44) le vérin de levage vertical est réalisé sous la forme d'un vérin hydraulique ou pneumatique, présentant un élément de levage vertical (32, 42), réalisé sous la forme d'une tige de piston, sur lequel est disposé un pivot s'engageant sur et/ou dans le couvercle (25) ou le fond (26) du CC (22).

18. Dispositif selon une des revendications 1 à 17, **caractérisé en ce que** les appareils de levage vertical (34, 44) peuvent être décalés à la fois l'un par rapport à l'autre et par rapport au point d'amenée du dispositif de transport.

19. Dispositif selon une des revendications 1 à 18, **caractérisé en ce que** l'appareil de levage vertical (34, 44) est réalisé sous la forme d'un vérin de levage raccordé à l'alimentation du dispositif de transport (30, 40) ou d'une broche filetée entraîné par un moteur à huile.

20. Dispositif selon la revendication 17, **caractérisé en ce que** concernant l'appareil de levage vertical (34, 44) le pivot s'écarte d'une forme circulaire quant à sa section et peut être verrouillé par une rotation dans le CC (22) en complémentarité de forme.

21. Dispositif selon la revendication 17, **caractérisé en ce que** concernant l'appareil de levage (34, 44) le pivot est réalisé pour s'engager au niveau du couvercle (25) du CC (22).

22. Dispositif selon la revendication 17, **caractérisé en ce que** concernant l'appareil de levage vertical (34, 44) le pivot est réalisé sous la forme d'un collet circulaire (74) destiné à s'engager sur le fond (26) dans la zone entourant l'ouverture d'entrée (27) du CC (22).

23. Dispositif selon une des revendications 1 à 22, **caractérisé en ce que** concernant un dispositif de transport (30, 40) sur ses deux supports longitudinaux parallèles (36, 46) ainsi qu'entre la paire arrière ainsi que la paire avant de la paire avant et/ou de la paire arrière de CC (22) sur l'élément de levage vertical (33, 43) des appareils de levage vertical (34, 44) s'engageant au niveau de la face inférieure du conteneur (20) est prévue une tôle de console (37, 47) formant le plan de la zone de charge (32, 42) pour l'installation du support de déplacement (50).

24. Dispositif selon une des revendications 1 à 23, **caractérisé en ce que** la tôle de console (37, 47) est munie d'ouvertures (38, 48) pour le passage des éléments de levage vertical (33, 43).

25. Dispositif selon une des revendications 1 à 24, **caractérisé en ce que** concernant un dispositif de transport (30, 40), sur ses deux supports longitudinaux (36, 46) parallèles l'un à l'autre, la tôle de console (37, 47) formant dans la zone de la paire avant ainsi que de la paire arrière des CC (22) les plans de la zone de charge (32, 42) respectifs est prévue pour l'installation latérale du support de déplacement (50).

26. Dispositif selon une des revendications 1 à 25, **caractérisé en ce que** concernant un wagon ou un véhicule utilitaire en tant que dispositif de transport (30, 40), un rail de contact (60) pouvant être raccordé au réseau électrique embarqué est prévu pour le logement du collecteur de courant (61) du support de déplacement (50).

27. Dispositif selon une des revendications 1 à 26, **caractérisé en ce que** la tôle de console (33, 43) peut être déplacée ou décalée sur les deux supports longitudinaux (36, 46) parallèles l'un à l'autre du dispositif de transport (30, 40) le long de ces derniers.
